**Europäisches Patentamt**

**European Patent Office**

**Office européen des brevets**

(19)

(11) Veröffentlichungsnummer: **0 174 422**
**B1**

(12) # EUROPÄISCHE PATENTSCHRIFT

(45) Veröffentlichungstag der Patentschrift:
**31.05.89**

(51) Int. Cl.⁴: **F 16 D 3/06,** F 41 F 21/06

(21) Anmeldenummer: **85101867.1**

(22) Anmeldetag: **21.02.85**

(54) Einrichtung zur mechanischen winkelgetreuen Übertragung von Drehbewegungen.

(30) Priorität: **08.09.84 DE 3433111**

(43) Veröffentlichungstag der Anmeldung:
**19.03.86 Patentblatt 86/12**

(45) Bekanntmachung des Hinweises auf die Patenterteilung:
**31.05.89 Patentblatt 89/22**

(84) Benannte Vertragsstaaten:
**BE CH DE IT LI NL**

(56) Entgegenhaltungen:
**DE-A-2 552 009**
**FR-A-2 446 959**
**FR-A-2 450 381**
**GB-A-540 808**
**GB-A-1 482 231**
**GB-A-1 605 107**
**US-A-3 411 324**

(73) Patentinhaber: **Wegmann & Co. GmbH, August-Bode- Strasse 1, D-3500 Kassel (DE)**

(72) Erfinder: **Heldmann, Heinrich, Ing. (grad),
Huttenplatz 5, D-3500 Kassel (DE)**
Erfinder: **Wallwey, Erich, Beethovenstrasse 17,
D-3502 Vellmar (DE)**

(74) Vertreter: **Feder, Heinz, Dr., Dominikanerstrasse 37, D-4000 Düsseldorf 11 (DE)**

EP 0 174 422 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft eine Einrichtung zur mechanischen vinkelgetreuen Übertragung von Drehbewegungen zwischen zwei relativ zu einem dritten Bauteil drehbar gelagerten Bauteilen, insbesondere zur Übertragung der Drehbewegung des Schildzapfens einer Waffe auf eine Winkelmeßvorrichtung, bei der die Übertragung der Drehbewegung von einer mit dem ersten Bauteil verbundenen ersten Welle über eine elastische Kupplung auf eine mit dem zweiten Bauteil verbundene zur ersten angenähert fluchtend und in einem vorgegebenen axialen Abstand angeordneten zweiten Welle erfolgt. Bei bestimmten drehbaren Maschinenteilen ist es erforderlich, die Winkelstellung des Maschinenteils jederzeit in beliebiger Stellung mit großer Genauigkeit reproduzierbar zu machen. Dies erfolgt in bekannter Weise dadurch, daß das Maschinenteil mit einer Winkelmeßvorrichtung, beispielsweise einem elektrischen Stellungsgeber, gekoppelt wird. Die Güte der Winkelübertragung hängt dabei im wesentlichen von der Kupplungsart zwischen dem drehbaren Bauteil und der Winkelmeßvorrichtung ab. Es hat sich gezeigt, daß die Genauigkeit der Winkelübertragung zwischen zwei relativ zu einem dritten Bauteil drehbar gelagerten Bauteilen von der Winkelstellung der beiden Drehachsen zueinander sowie vom Abstand der beiden Drehachsen in radialer Richtung abhängig ist.

Es ist bekannt, eine Winkelstellung der beiden Drehachsen zueinander durch Verwendung von elastischen Kupplungen auszugleichen. Sind die beiden miteinander durch die Kupplung zu verbindenden Wellen in axialer Richtung gegeneinander versetzt, so können Klauenkupplungen eingesetzt werden, die einen axialen Versatz der Drehachsen gegeneinander ausgleichen. Diese Klauenkupplungen haben aber den Nachteil, daß sie in radialer Richtung auf Dauer nicht spielfrei sind und somit Winkelübertragungsfehler verursachen.

Winkelübertragungsfehler aufgrund eines radialen Versatzes der beiden Drehachsen gegeneinander können in bestimmten Anwendungsfällen zu erheblichen Fehlern bei der Winkelbestimmung führen. Dies gilt insbesondere bei Einrichtungen zur Übertragung der Drehbewegung des Schildzapfens einer Waffe auf eine Winkelmeßvorrichtung. Eine derartige Einrichtung, bei der die Winkelmeßvorrichtung in einer Axialbohrung des Schildzapfens angeordnet ist, ist beispielsweise in DE-A-2 552 009 beschrieben.

Die der Erfindung zugrunde liegende Aufgabe bestand darin, eine Einrichtung der eingangs erwähnten Art zu schaffen, bei der ein beispielsweise durch Bautoleranzen bedingter radialer oder winkelmäßiger Versatz der Drehachsen der beiden relativ zu einem dritten Bauteil drehbar gelagerten Bauteile durch die Kupplungsart der beiden Bauteile miteinander ausgeglichen wird, so daß kein Winkelübertragungsfehler auftritt.

Die Lösung dieser Aufgabe geschieht mit den Merkmalen aus dem kennzeichnenden Teil des Patentanspruchs 1.

Wie weiter unten anhand eines Ausführungsbeispiels ersichtlich, geht die Erfindung von dem Grundgedanken aus, die eine der beiden miteinander zu verkuppelnden Wellen, über welche die Drehbewegung übertragen werden soll, in einer solchen Weise mit dem ihr zugeordneten Bauteil zu verbinden, daß die Welle in zwei aufeinander senkrecht stehenden Richtungen senkrecht zu ihrer Drehachse verschiebbar und um diese Richtungen verschwenkbar aufgehängt ist, aber andererseits spielfrei hinsichtlich einer Drehung um die Drehachse mit dem ihr zugeordneten Bauteil gekoppelt ist.

Die erfindungsgemäße Einrichtung ist gemäß Patentanspruch 2 in besonders vorteilhafter Weise als Einrichtung zur Übertragung der Drehbewegung des Schildzapfens einer Waffe auf eine Winkelmeßvorrichtung anwendbar. Die Erfindung ist aber auf diese Anwendungsart nicht beschränkt, sondern überall dort anwendbar, wo Winkelstellungen von drehbaren Maschinenteilen mit höchster Genauigkeit übertragen werden sollen.

Dabei ist von großer Bedeutung, daß der radiale Versatz zwischen den beiden Drehachsen sich aus der Summe verschiedener Einbautoleranzen ergeben kann, die praktisch nicht vermeidbar sind und im Einzelfall sehr unterschiedliche Werte besitzen können.

Es hat sich gezeigt, daß mittels der erfindungsgemäßen Einrichtung die Genauikgeit einer solchen Winkelübertragung erheblich gesteigert werden kann.

Im folgenden wird anhand der beigefügten Zeichnungen ein Ausführungsbeispiel für einen Einrichtung nach der Erfindung näher erläutert. In den Zeichnungen zeigen:

Fig. 1 eine Aufsicht auf die Lagerung des Schildzapfens im Gehäuse einer Waffe in vereinfachter Darstellung;

Fig. 2 einen Schnitt in Fig. 1 nach der Linie II - II;

Fig. 3 einen Schnitt in Fig 1 nach der Linie III - III.

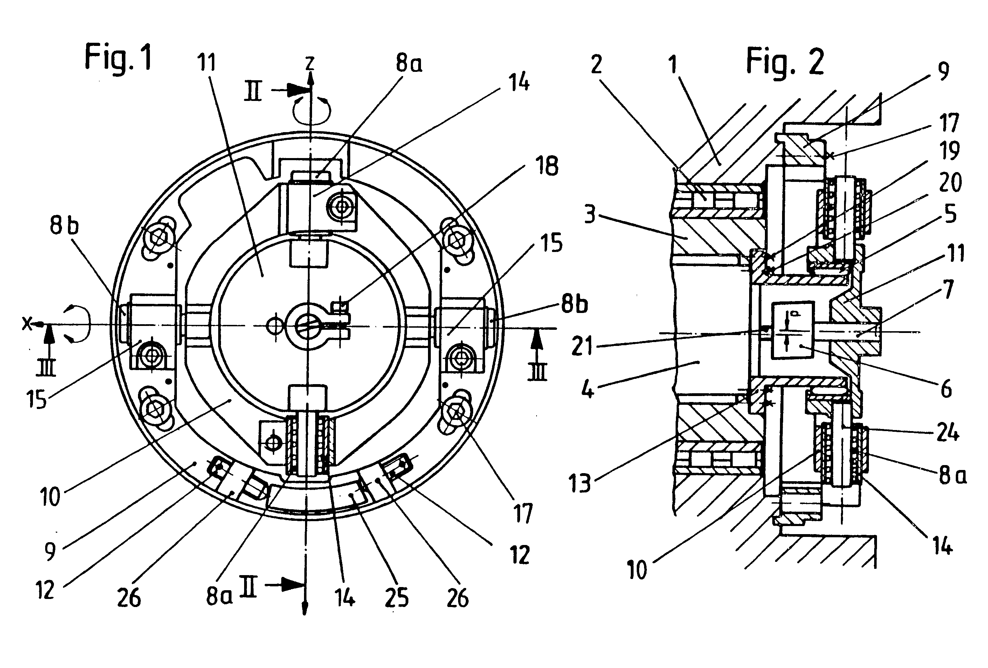

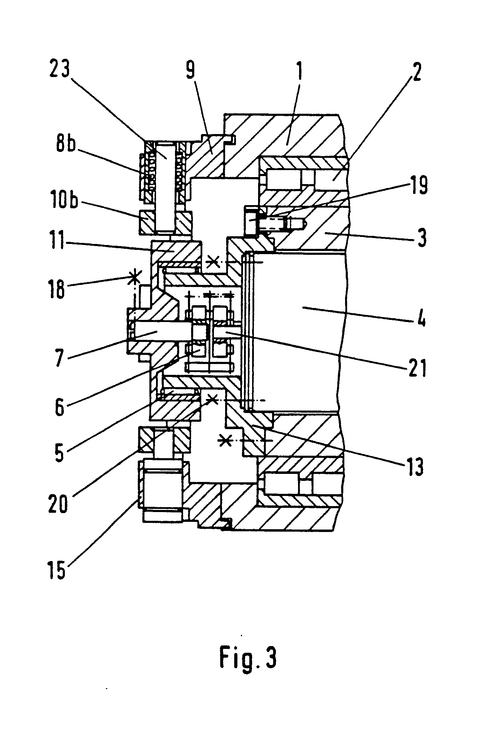

Das in den Fig. 1 bis 3 dargestellte Asführungsbeispiel betrifft die Anwendung einer Einrichtung zur mechanischen winkeltreuen Übertragung von Drehbewegungen zwischen zwei relativ zu einem dritten Bauteil drehbar gelagerten Bauteilen, wobei das eine Bauteil das Gehäuse 1 der Waffe und das andere Bauteil die Antriebswelle 21 einer elektrischen Winkelmeßvorrichtung 4 ist. Das dritte Bauteil, gegen das die beiden Bauteile drehbar gelagert sind, ist in diesem Falle der im Gehäuse 1 der Waffe drehbar gelagerte Schildzapfen 3. Es handelt sich also bei dem dargestellten Ausführungsbeispiel um den Fall, daß die beiden Bauteile, zwischen denen die Drehbewegung übertragen werden soll, absolut in Ruhe sind und das dritte Bauteil relativ zu den beiden ruhenden Bauteilen eine Drehbewegung ausführt. Selbstverständlich sind auch Anwendungsarten denkbar, bei denen das dritte Bauteil beispielsweise ein festes Gestell darstellt, in dem die beiden anderen Bauteile drehbar gelagert sind.

Bei dem dargestellten Ausführungsbeispiel ist die elektrische Winkelmeßvorrichtung 4 in einer Axialbohrung des Schildzapfens 3 der Waffe angeordnet, der über Lager 2 im Gehäuse 1 drehbar gelagert ist. Eine derartige Einrichtung ist beispielsweise in DE-A-2 552 009 beschrieben. Die elektrische Winkelmeßvorrichtung 4 ist mit Schraubenverbindungen 20 an einem Aufnahmeflansch 13 angeordnet, der wiederum über Schraubenverbindungen 19 mit dem Schildzapfen 3 verbunden ist. Auf diese Weise sind die Winkelmeßvorrichtung 4 und der Schildzapfen 3 drehfest miteinander verbunden. Eine Dezentrierung der Antriebswelle 21 der Winkelmeßvorrichtung 4 ist toleranzbedingt durch Ungenauigkeiten in der Ausgestaltung und Lagerung der Bauteile 3 und 13 gegeben.

Die Antriebswelle 21 der Winkelmeßvorrichtung 4 ist über eine elastische Kupplung 6 mit einer Welle 7 verbunden, die axialversetzt zur Welle 21 angeordnet ist. Die Welle 7 ist mittels einer Schraubklemmverbindung 18 in einer Nabe 11 befestigt, die über Nadellager 5 am Aufnahmeflansch 13 drehbar gelagert ist und in weiter unten noch näher erläuterter Weise mit einem Ringflansch 9 verbunden ist, der am Gehäuse 1 mittels Schraubverbindungen 17 befestigt ist. Die Dezentrierung der Welle 7 ist also bedingt durch Montage und baubedingte Toleranzen der Bauteile 1, 9 und 11 sowie durch die Lager 2 und 5.

Es entsteht also aufgrund einer Summe von Bautoleranzen ein radialer Versatz der beiden Drehachsen der Wellen 21 und 7. Die Summe dieser Bautoleranzen kann einen radialen Versatz, der in Fig. 2 mit d angegeben ist, bewirken, welcher zu Winkelfehlern führt, die in der Größenordnung von einigen zehntel Strich liegen können. Derartige Fehler führen beim Schießen auf größere Entfernungen zu Ablagen, die bei der heutigen geforderten Genauigkeit beim Schießen nicht mehr vernachlässigt werden können.

Die zwischen den beiden Wellen 21 und 7 angeordnete elastische Kupplung 6 kann im wesentlichen nur axiale Verschiebungen zwischen den beiden Wellen und bis zu einem gewissen Grade Winkelfehler ausgleichen. Ein radialer Versatz der beiden Drehachsen gegeneinander kann durch diese Kupplung nicht ausgeglichen werden.

Zum Ausgleich des radialen Versatzes der beiden Drehachsen der Wellen 21 und 7 bzw. der Bauteile 4 und 1 ist nun die Nabe 11 mit dem Ringflansch 9 über eine besondere Kopplungsvorrichtung verbunden, welche radiale Bewegungen der Nabe 11 in zwei aufeinander senkrecht stehenden Richtungen X und Z und Schwenkbewegungen der Nabe 1 um diese beiden Richtungen X und Z zuläßt. Hierzu sind an der Nabe 11 zwei diametral zueinander in radialer Richtung stehende Bolzen 24 angeordnet, die in Linearkugellagern 8a geführt sind, welche in Lagergehäusen 14 an einem Zwischenring 10 angeordnet sind. Weiterhin sind am Zwischenring 10 um 90° gegenüber den Bolzen 24 versetzt ebenfalls zwei diametral zueinander in radialer Richtung stehende Bolzen 23 angeordnet, die in Linearkugellagern 8b geführt sind, welche in Lagergehäusen 15 am Ringflansch 9 angeordnet sind.

Die Linearkugellager 8a und 8b sind einstellbar und spielfrei ausgebildet.

Die Übertragung der relativen Drehbewegung zwischen Gehäuse 1 und Schildzapfen 3 auf die Antriebswelle 21 der Winkelmeßvorrichtung 4 erfolgt also vom Gehäuse 1 über den Ringflansch 9, die Linearkugellager 8b, die Bolzen 23, den Zwischenring 10, die Linearkugellager 8a, die Bolzen 24, die Nabe 11, die Welle 7 und die elastische Kupplung 6. Radiale Lageänderungen zwischen den Wellen 21 und 7 werden von den beiden Linearkugellagern 8a und 8b in den Richtungen X und Z aufgenommen, ebenso Änderungen der Winkellage der beiden Wellen 21 und 7 gegeneinander, welche durch Drehung der Nabe 11 um die beiden Achsen X und Z im Zusammenwirken mit der elastischen Kupplung 6 ausgeglichen werden.

Es ist damit eine Einrichtung geschaffen, die spielfrei und mit wenig Kraftaufwand den durch Bautoleranzen bedingten radialen Versatz zwischen den Drehachsen der Wellen 21 und 7 ausgleicht.

Die in den Fig. 1 bis 3 dargestellte Einrichtung besitzt weiterhin eine Vorrichtung zur Grobjustierung des zu übertragenden Umfangswinkels zwischen dem Gehäuse 1 und der Winkelmeßvorrichtung 4. Diese Vorrichtung ist Fig. 1 zu entnehmen. Sie besitzt einen am Gehäuse 1 fest angeordneten Anschlag 25, der in eine in Umfangsrichtung im Ringflansch 9 angeordnete Ausnehmung eingreift, sowie zwei an den Enden der Ausnehmung angeordnete Gewindeteile 26, in denen Gewindebolzen 12 angeordnet sind, die sich am Anschlag 25 abstützen. Zur Justierung werden zunächst die Befestigungsschrauben 17 des Ringflansches 19 gelöst. Die Verdrehung des Ringflansches 9 gegen das Gehäuse 1 erfolgt durch Drehen der beiden Gewindebolzen 12. Nach der gewünschten Verdrehung werden die Befestigungsschrauben 17 wieder angezogen, so daß der Ringflansch 9 mit dem Gehäuse 1 wieder fest verbunden ist. Die Feinabstimmung des Übertragungswinkels, die sich im Bereich von hundertstel Strich bewegt, erfolgt dann elektrisch über die Winkelmeßvorrichtung 4.

## Patentansprüche

1. Einrichtung zur mechanischen winkelgetreuen Übertragung von Drehbewegungen zwischen zwei relativ zu einem dritten Bauteil (3) drehbar gelagerten Bauteilen (1, 21), insbesondere zur Übertragung der Drehbewegungen des Schildzapfens (3) einer Waffe auf eine Winkelmeßvorrichtung (4), bei der die Übertragung der Drehbewegungen von einer mit dem ersten Bauteil (1) verbundenene ersten Welle (7) über eine elastische Kupplung (6) auf eine mit dem zweiten Bauteil (21) verbundene, zur ersten angenähert fluchtend und in einen vorgegebenen axialen Abstand angeordneten zweiten Welle (21) erfolgt, dadurch gekennzeichnet, daß die eine Welle (7) an einer drehbar am dritten Bauteil (3) gelagerten Nabe (11) angeordnet ist, welche über zwei diametral zueinander in radialer Richtung angeordnete, in Linearkugellagern (8a) geführte erste Bolzen (24) mit einem die Nabe (11) umgebenden Zwichenring (10) in Richtung der ersten Bolzen (24) verschiebbar und um deren Bolzenachsen verdrehbar verbunden ist, und der Zwischenring (10) über zwei diametral zueinander in radialer Richtung gegenüber den ersten Bolzen (24) um 90° verdreht angeordnete in Linearkugellagern (8b) geführte zweite Bolzen (23) mit einem den Zwischenring (10) umgebenden Flansch (9) in Richtung der zweiten Bolzen (23) verschiebbar und um deren Bolzenachsen verdrehbar verbunden sind, und der Flansch (9) mit dem dieser Welle zugeordneten Bauteil (1) fest verbunden ist.

2. Einrichtung nach Anspruch 1 zur Übertragung der Drehbewegungen des Schildzapfens einer Waffe auf eine Winkelmeßvorrichtung, dadurch gekennzeichnet, daß das erste Bauteil das Gehäuse (1) der Waffe und das zweite Bauteil die Antriebswelle (21) einer Winkelmeßvorrichtung (4) ist, während das dritte Bauteil der im Gehäuse (1) der Waffe drehbar gelagerte Schildzapfen (3) ist, und die Winkelmeßvorrichtung (4) in einer Axialbohrung des Schildzapfens (3) angeordnet und mit diesem über einen Aufnahmeflansch (13) drehfest verbunden ist, an dem die Nabe (11) über Nadellager (5) drehbar gelagert ist, wobei die an der Nabe (11) angeordnete Welle (7) dem Gehäuse (1) der Waffe zugeordnet ist.

3. Einrichtung nach Anspruch 2, gekennzeichnet durch eine Vorrichtung zur Winkeljustierung des mit dem Gehäuse (1) der Waffe über Schraubenverbindungen (17) verbundenen Flansches (9) mit einem am Gehäuse (1) fest angeordneten Anschlag (25), der in eine in Umfangsrichtung im Flansch (9) angeordnete Ausnehmung eingreift und zwei an den Enden der Ausnehmung angeordneten Gewindeteilen (26), in denen Gewindebolzen (12) angeordnet sind, die sich an dem Anschlag (25) abstützen.

## Claims

1. A mechanism for the mechanical angle-true transmission of rotary movements between two component parts (1, 21) mounted rotatably relative to a third component part (3), more especially for the transmission of the rotary movements of the trunnion (3) of a weapon to an angle-measuring device (4), in which the transmission of the rotary movements is effected from a first shaft (7), connected to the first component part (1), by way of an elastic coupling (6) to a second shaft (21) which is connected to the second component part (21) and which is arranged approximately in alignment with regard to the first one and at a predetermined axial spacing, characterised in that the one shaft (7) is arranged on a hub (11) which is mounted rotatably on the third component part (3) and which is connected, by way of two first bolts (24) which are arranged diametrically to one another in the radial direction and which are guided in linear ball bearings (8a), to an intermediate ring (10), which surrounds the hub (11), so as to be displaceable in the direction of the first bolts (24) and rotatable about the bolt axes thereof, and the intermediate ring (10) is connected, by way of two second bolts (23) which are arranged rotated through 90° relative to the first bolts (24) diametrically to one another in the radial direction and which are guided in linear ball bearings (8b), to a flange (9), which surrounds the intermediate ring (10), so as to be displaceable in the direction of the second bolts (23) and rotatable about the bolt axes thereof, and the flange (9) is connected securely to the component part (1) associated with this shaft.

2. A mechanism according to claim 1 for the transmission of the rotary movements of the trunnion of a weapon to an angle-measuring device, characterised in that the first component part is the housing (1) of the weapon and the second component part is the driving shaft (21) of an angle-measuring device (4), whilst the third component part is the trunnion (3) mounted rotatably in the housing (1) of the weapon, and the angle-measuring device (4) is arranged in an axial bore of the trunnion (3) and is connected in a torsionally-fast manner to this by way of a reception flange (13), on which the hub (11) is mounted rotatably by way of needle bearings (5), in which respect the shaft (7) arranged on the hub (11) is associated with the housing (1) of the weapon.

3. A mechanism according to Claim 1, characterised by a device for the angle adjustment of the flange (9), connected to the housing (1) of the weapon by way of screw connections (17), having a stop (25) which is arranged securely on the housing (1) and which engages into a recess arranged in the circumferential direction in the flange (9) and two threaded parts (26) which are arranged at the ends of the recess and in which threaded bolts (12) are arranged, which are supported against the stop (25).

**Revendications**

1. Dispositif pour la transmission mécanique, respectant les angles des mouvements de rotation entre deux pièces (1, 21) montées à pivot par rapport à une troisième pièce (3) et, en particulier, pour la transmission des mouvements de rotation du tourillon (3) d'une arme vers un dispositif de mesure d'angle (4), dans lequel la transmission des mouvements de rotation d'un premier arbre (7) relié à la première pièce (1) s'effectue par l'intermédiaire d'un accouplement élastique (6) vers un second arbre (21) relié à la seconde pièce (21) et disposé à distance axiale par rapport au premier arbre et à peu près au même niveau, caractérisé en ce que l'arbre (7) est monté sur un moyeu (11) supporté à pivot par la troisième pièce (3), ce moyeu étant relié par deux premiers boulons (24) guidés dans des paliers à billes linéaires (8a) et opposés diamétralement l'un à l'autre en direction radiale à une bague intermédiaire (10) entourant le moyeu (11) et pouvant se déplacer en direction des premiers boulons (24) et le moyeu pouvant tourner autour des axes des boulons tandis que la bague intermédiaire (10) est reliée par deux seconds boulons (23) guidés dans des paliers à billes linéaires (8b) et décalés angulairement de 90° par rapport aux premiers boulons (24) et montés de façon diamétralement opposée l'un par rapport à l'autre en direction radiale, avec une bride (9) entourant la bague intermédiaire (10), avec possibilité de déplacement de la bague intermédiaire en direction des seconds boulons (23) et avec possibilité de rotation autour de l'axe de ces boulons, tandis que la bride (9) est reliée rigidement à la pièce (1) correspondant à cet arbre.

2. Dispositif selon la revendication 1 pour la transmission des mouvements de rotation du tourillon d'une arme vers un dispositif de mesure d'angle, caractérisé en ce que la première pièce constitue le boîtier (1) de l'arme et que la seconde pièce constitue l'arbre d'entraînement (21) d'un dispositif de mesure d'angle (4), tandis que la troisième pièce est constituée par le tourillon (3) monté à pivot dans le boîtier (1) de l'arme et que le dispositif de mesure d'angle (4) est disposé dans un alésage axial du tourillon (3) et est fixé rigidement à celui-ci par une bride de support (13) sur laquelle est monté à pivot le moyeu (11) par l'intermédiaire du palier à aiguilles (5), tandis que l'arbre (7) monté sur le moyeu (11) correspond au boîtier (1) de l'arbre.

3. Dispositif selon la revendication 2, caractérisé par un élément de réglage de l'angle de la bride (9) reliée au boîtier (1) de l'arme par des assemblages vissés (17) avec une butée (25) montée rigidement sur le boîtier (1), ladite butée engrenant dans une cavité disposée en direction périphérique dans la bride (9) et avec deux pièces filetés (26) disposées aux extrémités de la cavité et dans lesquelles sont montés les boulons filetés (12) qui prennent appui sur la butée (25).

Fig. 2

9
17
19
20
5
11
7
6
24
8a
14

1
2
3
21
4
13
10

Fig.1

14
18
15
8b
II
8a
17
12
26
25
14
z
II
8a II
11
26
10
9
12
8b
II
15
x

Fig. 3